# EUROPÄISCHE PATENTSCHRIFT

(11) **EP 2 665 680 B1**
(45) Veröffentlichungstag und Bekanntmachung des Hinweises auf die Patenterteilung: **18.10.2017**
(21) Anmeldenummer: 12700674.0
(22) Anmeldetag: 17.01.2012
(51) Int. Cl.: C01B 17/90, C01F 17/00, C01G 23/053, C01G 49/14, C22B 3/20, C22B 34/12

(54) **VERFAHREN ZUR GEWINNUNG VON ELEMENTEN ODER ELEMENTVERBINDUNGEN AUS DEN BEI DER PRODUKTION VON TITANDIOXID ANFALLENDEN ZWISCHEN- ODER NEBENPRODUKTEN**
METHOD FOR OBTAINING ELEMENTS OR ELEMENT COMPOUNDS FROM THE INTERMEDIATE PRODUCTS OR BY-PRODUCTS OBTAINED DURING THE PRODUCTION OF TITANIUM DIOXIDE
PROCÉDÉ DE PRODUCTION D'ÉLÉMENTS OU DE COMPOSÉS D'ÉLÉMENTS À PARTIR DE PRODUITS INTERMÉDIAIRES OU DE PRODUITS SECONDAIRES CRÉÉS LORS DE LA PRODUCTION DE DIOXYDE DE TITANE

(30) Priorität: 18.01.2011 DE 102011000197; 17.02.2011 DE 102011000804
(43) Veröffentlichungstag der Anmeldung: 27.11.2013
(73) Patentinhaber: Sachtleben Pigment GmbH, 47829 Krefeld (DE); Jung, Ralf P., 78234 Engen (DE)
(72) Erfinder: JUNG, Ralf, P., 78234 Engen (DE); AUER, Gerhard, 47800 Krefeld (DE); RELLER, Armin, 86159 Augsburg (DE); PROFT, Bernd, 47506 Neukirchen-Vluyn (DE)
(74) Vertreter: Nobbe, Matthias
(86) Internationale Anmeldenummer: PCT/EP2012/050655
(87) Internationale Veröffentlichungsnummer: WO 2012/098126

(56) Entgegenhaltungen:
- EP-A1- 1 522 522
- DE-A1- 3 329 842
- DE-A1- 10 106 539
- US-B1- 6 337 061

## Beschreibung

### Gebiet der Erfindung

Die vorliegende Erfindung betrifft Verfahren zur Gewinnung von einem oder mehreren Elementen und/oder Elementverbindungen aus bei der Herstellung von Titandioxid anfallenden Zwischen- oder Nebenprodukten.

### Hintergrund der Erfindung

Titandioxid wird als Weißpigment für eine Vielzahl von Produkten und Anwendungen eingesetzt. Neben Farben und Lacken finden Titandioxidpigmente auch für Kunststoffe, Papier, Lebensmittel sowie zahlreiche weitere Produkte Verwendung.

Die beiden wichtigsten großtechnisch verwendeten Verfahren zur Herstellung von Titandioxid (TiO₂) sind das Chloridverfahren (ca. 55% des jährlich erzeugten TiO₂) und das Sulfatverfahren (ca. 45% des jährlich erzeugten TiO₂).

Beide Verfahren führen zu einem praktisch identischen Produkt aber unterscheiden sich erheblich hinsichtlich der zu Grunde liegenden Chemie und Verfahrenstechnik. Die wesentlichen Reaktionsgleichungen und eine Beschreibung der Verfahren sind in G. Buxbaum (Editor), G. Pfaff (Editor), Industrial Inorganic Pigments, 3rd Edition, WILEY-VCH, Weinheim, 2005, und Ullmann's Encyclopedia of Industrial Chemistry, Release 2010, 7th Edition, WILEY angegeben.

Obwohl beide Verfahren seit Jahrzehnten zur Herstellung von Titandioxid eingesetzt werden, ist die Behandlung und Verwertung der in beträchtlichen Mengen anfallenden Nebenprodukte und Reststoffe, die die Menge an hergestelltem Titandioxid um ein mehrfaches übersteigen, nach wie vor problematisch. Insbesondere mangelt es an ökologisch akzeptablen, technisch machbaren und wirtschaftlich tragfähigen Verwertungsmöglichkeiten der entstehenden Nebenprodukte.

Aufgrund der unterschiedlichen Chemie und Verfahrenstechnik bei den beiden Herstellverfahren (Sulfatverfahren und Chloridverfahren) unterscheiden sich die beiden Verfahren auch hinsichtlich der anfallenden Nebenprodukte.

Beispielsweise fallen bei einer 100000 t TiO₂-Sulfatanlage als Nebenprodukte jährlich etwa 800000 t Dünnsäure (mit Metallverbindungen, wie z. B. Salzen von Ti, Fe, Al, Mg, Mn, Cr und V, stark verunreinigte Gebrauchtschwefelsäure), je nach Rohstoffeinsatz bis zu 400000 t Grünsalz (= Eisen(II)sulfat-Heptahydrat), etwa 20000 t unlösliche Erzrückstände und zusätzlich sulfathaltiges Abwasser (Menge stark abhängig von der Verfahrensführung) an.

Die wichtigsten Nebenprodukte bei einer TiO₂-Chloridanlage sind je nach Rohstoffeinsatz sehr unterschiedliche, aber erhebliche Mengen an Eisenchlorid und anderen Metallchloriden, mit Metallchloriden verunreinigte Rückstände von Koks und Rohstoffen und chloridhaltiges Abwasser.

In Abhängigkeit von Herstellverfahren, geographischen Gegebenheiten und lokalen Umweltvorschriften haben sich zur Vermeidung, Verringerung, Aufarbeitung, Umwandlung oder Verwertung der verschiedenen Nebenprodukte sehr unterschiedliche Verfahren herausgebildet.

Die Dünnsäure, die im Sulfatverfahren nach dem Verfahrensschritt der Hydrolyse und der Abtrennung des Roh-TiO₂ (Titanoxidhydrat) anfällt, kann aufkonzentriert und wiederverwertet werden, wobei als sekundäres Nebenprodukt das sogenannte Filtersalz anfällt, welches aus dem Säurekreislauf abgetrennt wird. Nach thermischer Spaltung werden aus dem Filtersalz SO₂, was zu Schwefelsäure weiter verarbeitet wird, sowie verunreinigtes Eisenoxid als tertiäre Nebenprodukte erhalten. Das Eisenoxid findet Verwendung bei der Zementherstellung. Andere Vorschläge zur Verwertung dieses Eisenoxids aus der Filtersalzspaltung umfassen die Extraktion von Vanadium (DE 195 26 655). Neuere Vorschläge zur Verwertung des Filtersalzes umfassen die Verwendung als Chromatreduzierer (EP 1 648 840).

Alternativ kann die Dünnsäure neutralisiert, wobei als sekundäres Nebenprodukt Gips in unterschiedlicher Reinheit anfällt, oder zur Herstellung von Düngemitteln verwendet werden.

Das Dokument DE 101 06 539 A1 beschreibt ein Verfahren zur Gewinnung von Titanoxid aus Aufschlussrückstanden, die als Nebenprodukt des Sulfatverfahrens zur Titandioxidproduktion erhalten werden. Die Wirtschaftlichkeit der unterschiedlichen Verfahren zur Verwertung der Nebenprodukte aus der Titandioxidherstellung ist überwiegend unbefriedigend. Es besteht daher weiterhin Bedarf nach technisch und wirtschaftlich interessanten Alternativen zur Verwertung der bei der Titandioxidherstellung anfallenden Nebenprodukte.

### Zusammenfassung der Erfindung

Die Erfinder der vorliegenden Erfindung haben herausgefunden, dass die bei der Titandioxidherstellung anfallenden Zwischen- und Nebenprodukte Elemente und Elementverbindungen enthalten, deren Gewinnung wirtschaftlich interessant ist.

In einem ersten Aspekt betrifft die vorliegende Erfindung daher ein Verfahren zur Gewinnung von einem oder mehreren Element(en) und/oder Verbindung(en) davon aus Zwischen- oder Nebenprodukten der Herstellung von Titandioxid nach dem Sulfatverfahren, wobei die nach dem Verfahrensschritt der Hydrolyse und der Abtrennung des Roh-TiO₂ anfallende Dünnsäure in einem Kreislaufprozess nach ein- oder mehrmaliger Aufkonzentrierung und dem Abtrennen einer eisensulfathaltigen Ausfällung zum Aufschluss titanhaltiger Materialien wiederverwendet wird, so dass eine Akkumulierung des einen oder der mehreren Element(e) und/oder Verbindung(en) davon in den im Sulfatverfahren verwendeten schwefelsauren Lösungen erfolgt, und wobei nach der Akkumulierung eine Abreicherung des einen oder der mehreren Element(e) und/oder Verbindung(en) davon vorgenommen wird, wobei bei der Abreicherung das eine oder die mehreren Element(e) und/oder Verbindung(en) davon durch ein geeignetes Trennverfahren aus dem Kreislauf ganz oder teilweise entfernt werden.

In einem weiteren Aspekt betrifft die Erfindung ein Verfahren zur Gewinnung von einem oder mehreren Element(en) und/oder Verbindung(en) davon aus Zwischen- oder Nebenprodukten der Herstellung von Titandioxid nach dem Sulfatverfahren, wobei zusätzlich zu den Ti-haltigen Rohstoffen, welche bei der Herstellung von Titandioxid nach dem Sulfatverfahren üblicherweise als Ausgangsstoffe verwendet werden, mindestens eine weitere Zusammensetzung, die das eine oder die mehreren Element(e) und/oder Verbindungen davon enthalten, in den Prozess zur Herstellung von Titandioxid eingebracht wird, und das eine oder die mehreren Element(e) und/oder Verbindungen davon aus Zwischen- oder Nebenprodukten der Herstellung von Titandioxid abgetrennt werden.

Bei den bei der Herstellung von Titandioxid anfallenden Zwischen- oder Nebenprodukten kann es sich um Aufschlussrückstand, Schwarzlösung, Dünnsäure, Filtersalz, Abbrand oder eine durch Aufkonzentrierung der Dünnsäure hergestellte schwefelsaure Lösung handeln. Die Erfindung richtet sich auf ein Verfahren zur Gewinnung von einem oder mehreren Element(en) und/oder Verbindung(en) aus bei der Herstellung von Titandioxid nach dem Chloridverfahren anfallenden Zwischen- oder Nebenprodukten, wobei das eine oder die mehreren Element(e) oder Verbindung(en) davon ausgewählt wird/werden aus der Gruppe bestehend aus Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, At, Fr, Ra, Ac, Th, Pa, U, Pu und Verbindungen davon.

### Beschreibung der Abbildungen

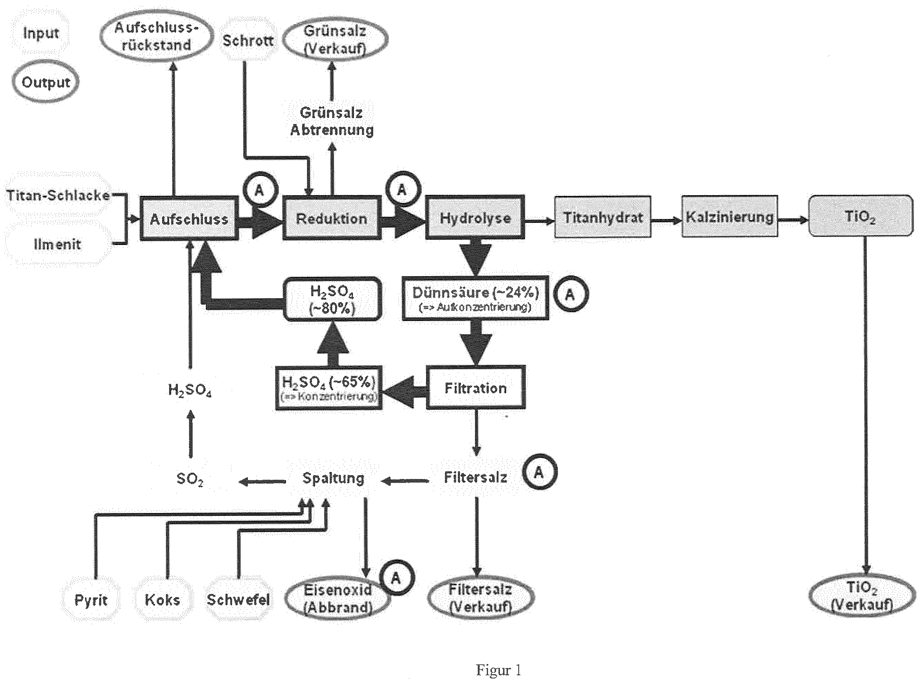

Figur 1 zeigt schematisch und beispielhaft, ohne Einschränkung, verschiedene Verfahrensschritte bei der Herstellung von Titandioxid nach dem Sulfatverfahren. Der Säurekreislauf ist durch fett dargestellte Pfeile kenntlich gemacht. Mögliche Abreicherungspunkte für die Elemente und/oder Elementverbindungen sind durch den Buchstaben "A" gekennzeichnet.

### Detaillierte Beschreibung der Erfindung

Bei den bekannten Verfahren zur Verwertung der bei der Titandioxidherstellung anfallenden Nebenprodukte liegt der Fokus auf den Hauptkomponenten der Nebenprodukte (Eisensulfat im Filtersalz als Chromatreduzierer, TiO₂-Anteil als funktionelle Komponente im Aufschlussrückstand). Die Nebenkomponenten bzw. Spurenelemente wurden bisher nicht beachtet.

Als Spurenelemente werden hierin alle bei Raumtemperatur (20°C) und Normaldruck (1000 Millibar) als Feststoff oder Flüssigkeit vorliegende Elemente definiert, die in den bei der Titandioxidproduktion verwendeten Rohstoffen in geringen Mengen vorkommen, mit Ausnahme von Li, C, Na, Mg, Al, Si, P, S, K, Ca, Ti, Mn, Fe, Br und I. Spurenelemente schließen insbesondere die folgenden ein: Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, TI, Pb, Bi, Po, At, Fr, Ra, Ac, Th, Pa, U, Pu. Besonderes Interesse liegt hierbei auf den folgenden Elementen: Sc, Y, La, Ce, Pr, Nd, Pm, Sm, Eu, Gd, Tb, Dy, Ho, Er, Tm, Yb, Lu, Cr, V, Nb, Ta, Ga und In.

Die vorliegende Erfindung basiert auf der Erkenntnis, dass die bei der Titandioxidherstellung anfallenden Zwischen- oder Nebenprodukte Elemente und Elementverbindungen in solchen Konzentrationen enthalten, insbesondere Seltenerdmetall-Verbindungen, deren Gewinnung wirtschaftlich interessant ist, wobei diese Verwendung der Nebenprodukte gleichzeitig die Probleme, die mit der Verwertung der Nebenprodukte verbunden sind, überwindet.

Im Zuge der Verknappung und der teilweise exorbitanten Preissteigerungen bei Seltenerdmetall-Verbindungen wird eine Betrachtung dieser Stoffe zunehmend interessanter. Nach dem Stand der Technik werden Metalle der Seltenen Erden oder deren Salze durch Umsetzung mit Schwefelsäure in Lösung gebracht und durch unterschiedliche Trennverfahren separiert. Typischerweise erfolgt das Lösen mit Schwefelsäure bei erhöhten Temperaturen, beispielsweise in Drehrohröfen oder anderen kontinuierlichen oder diskontinuierlichen Öfen. Der Aufwand hierfür ist in der Regel beträchtlich, weil die Konzentrationen der gewünschten Elemente meist sehr gering sind.

Die Konzentrationen einiger wirtschaftlich interessanter Metalle in einzelnen Nebenprodukten der TiO₂-Produktion sind in Tabelle 1 angegeben. Teilweise finden sich dabei Konzentrationen, die denen üblicher Rohstoffe zur Gewinnung dieser Elemente durchaus ähnlich sind. Besonders vorteilhaft ist dabei die Tatsache, dass diese Elemente teilweise bereits in gelöster Form (z.B. in Dünnsäure oder aufkonzentrierter Dünnsäure) bzw. in löslicher Form (z.B. in Filtersalz) vorliegen.

**Tabelle 1: Ausgewählte Nebenbestandteile der Nebenprodukte aus der Titandioxidherstellung**

| **Element** | **Aufschlussrückstand/ppm** | **Filtersalz/ppm** | **Eisenoxid/ppm** |
|---|---|---|---|
| Cr | 500 - 1000 | ∼600 | ∼1200 |
| V | 2000 | ∼1500 | ∼3000 |
| Nb | ∼1000 | <5 | <5 |
| Ta | 50 - 500 | <5 | <5 |
| Sc | 10 - 50 | 10 - 50 | 50 - 500 |
| Ga | 50 - 100 | <5 | 50 - 500 |

Die Nebenprodukte enthalten ferner Neodym und Cer in höheren Konzentrationen.

Die Erfindung betrifft daher in einem ersten Aspekt Verfahren zur Gewinnung von einem oder mehreren Element(en) und/oder Elementverbindungen, wobei als Ausgangsmaterial bei der Herstellung von Titandioxid anfallende Zwischen- oder Nebenprodukte verwendet werden sowie die Verwendung von bei der Herstellung von Titandioxid anfallenden Zwischen- oder Nebenprodukten zur Gewinnung von einem oder mehreren Element(en) und/oder Elementverbindungen. Die Zwischen- oder Nebenprodukte stammen dabei aus der Herstellung von Titandioxid nach dem Sulfatverfahren mit Säurekreislauf. "Säurekreislauf" bedeutet in diesem Zusammenhang, dass die nach dem Verfahrensschritt der Hydrolyse und der Abtrennung des Roh-TiO₂ anfallende Dünnsäure in einem Kreislaufprozess nach ein- oder mehrmaliger Aufkonzentrierung und dem Abtrennen einer eisensulfathaltigen Ausfällung zum Aufschluss titanhaltiger Materialien wiederverwendet wird. Dieser Kreislaufprozess führt zu einer Akkumulierung des einen oder der mehreren Element(e) und/oder Verbindung(en) davon in den im Sulfatverfahren verwendeten schwefelsauren Lösungen. Nach der Akkumulierung erfolgt dann eine Abreicherung des einen oder der mehreren Element(e) und/oder Verbindung(en), wobei bei der Abreicherung das eine oder die mehreren Element(e) und/oder Verbindung(en) davon durch ein geeignetes Trennverfahren aus dem Kreislauf ganz oder teilweise entfernt werden. Die Abreicherung des einen oder der mehreren Element(e) und/oder Verbindung(en) davon in dem Kreislaufprozess kann dabei zeitlich alternierend mit der Akkumulierung erfolgen. Die Abreicherung des einen oder der mehreren Element(e) und/oder Verbindung(en) kann jedoch auch kontinuierlich in einem By-pass erfolgen.

Der Kreislaufprozess zum Recycling der Dünnsäure ist schematisch in Figur 1 gezeigt. In diesem Kreislaufprozess zum Dünnsäure-Recycling, wird die Dünnsäure aufkonzentriert sowie Eisensulfat (als sogenanntes Filtersalz) ausgefällt und abfiltriert. Die durch die weitere Aufkonzentrierung erhaltene Schwefelsäure wird dann wieder zum Aufschluss titanhaltiger Materialien verwendet. Optional kann dabei, ggf. auch kontinuierlich, anteilig frische Schwefelsäure zugesetzt werden. Eine solche bei der TiO₂-Herstellung nach dem Sulfatverfahren angewandte Kreislauffahrweise hat sich als vorteilhaft herausgestellt.

Als "Kreislaufprozess" oder "Kreislauffahrweise" wird hierin allgemein ein Prozess bezeichnet, bei dem zumindest eine Teilmenge eines Stoffes oder Stoffgemisches eine Kette von Verfahrensschritten durchläuft und im Kreis gefahren wird, wobei die Zusammensetzung der im Kreislaufprozess umlaufenden Materialien von Ort zu Ort in der Regel unterschiedlich ist.

Die derartige Wiederverwendung der Dünnsäure über eine Kreislauffahrweise führt im Laufe der Zeit zu einer starken Anreicherung des einen oder der mehreren Element(e) und/oder Verbindung(en) davon, welche bei der Abtrennung des Filtersalzes von der aufkonzentrierten Schwefelsäure überwiegend in der Flüssigphase verbleiben, in den schwefelsauren Lösungen des Kreislaufprozesses (einschließlich der Dünnsäure).

Auf diese Weise ergibt sich für die Verbindungen, welche über den gesamten Kreislaufprozess eine gute Löslichkeit aufweisen, eine fortwährende Akkumulierung, so dass Konzentrationen erreicht werden können, welche weit über denen liegen, welche ohne Kreislaufprozess erreicht werden, bis das Löslichkeitsprodukt an einer Stelle des Kreislaufs schließlich überschritten wird und ein stationärer Zustand erreicht wird, bei dem die in den Kreislauf eingebrachte Menge des betreffenden Elements identisch mit der ausgetragenen Menge ist. Dies trifft in besonderer Weise auf Elemente zu, welche nur in geringen Konzentrationen in den Kreislaufprozess eingebracht werden. Diese Elemente können durch die erfindungsgemäße Einbringung in den Kreislaufprozess eine erhebliche Anreicherung erfahren.

Verbindungen, welche an einer Stelle des Kreislaufs hingegen eine geringe Löslichkeit aufweisen, werden dagegen kaum akkumuliert, insbesondere nicht über einen längeren Zeitraum. Vorzugsweise wird der Kreislaufprozess so gestaltet und gesteuert, dass die unerwünschten Elemente an einer Stelle aus dem Prozess ausgetragen werden, während die erwünschten Elemente im Kreislauf fortwährend akkumuliert werden.

Auf diese Weise erfolgt mit zunehmender Dauer eine Akkumulierung gewisser Elemente im Kreislauf, während die Konzentration der anderen Elemente (an dem jeweiligen Ort im Kreislaufprozess) weitgehend konstant bleibt. Vorzugsweise wird der Kreislaufprozess alternierend betrieben mit einer Akkumulationsphase und einer Abreicherungsphase für die gewünschten Elemente, wobei insbesondere für Elemente, welche nur in sehr geringen Konzentrationen in den Kreislauf eingebracht werden, die Akkumulationsphase wesentlich länger als die Abreicherungsphase gewählt werden kann.

Beispielsweise kann eine Akkumulierung über Wochen, Monate oder gar Jahre erfolgen. Es ist gerade bei einer sehr langen Akkumulationsphase wirtschaftlich besonders attraktiv zur Anreicherung bestimmter Elemente einen Kreislaufprozess zu verwenden, welcher bereits für einen chemischen Prozess Verwendung findet. Auf diese Weise können erhebliche wirtschaftliche Synergien genutzt werden. Ein Beispiel für einen solchen Kreislaufprozess ist der Herstellungsprozess für Titandioxid nach dem Sulfatverfahren, wenn die anfallende Dünnsäure aufkonzentriert und wieder zum Aufschluss titanhaltiger Rohstoffe verwendet wird.

Nach der Akkumulierung kann dann eine Abreicherung des einen oder der mehreren Element(e) und/oder Verbindung(en) davon vorgenommen werden, wobei bei der Abreicherung das eine oder die mehreren Element(e) und/oder Verbindung(en) davon durch ein geeignetes Trennverfahren aus dem Kreislauf ganz oder teilweise entfernt werden, so dass in dem Kreislaufprozess zeitlich alternierend eine Akkumulierung und Abreicherung des einen oder der mehreren Element(e) und/oder Verbindung(en) davon erfolgt. Diese Abreicherung kann entweder direkt im Kreislauf erfolgen oder an einem Teilstrom des Kreislaufs, welcher im by-pass zum Abreicherungsschritt geführt wird, oder es kann ein Teil des Stoffstroms aus dem Kreislauf ausgeschleust und separat aufgearbeitet werden.

Die Gewinnung der gewünschten Elemente erfolgt vorzugsweise in der Art, dass diese auf eine für das jeweilige Element spezifischen Weise aus dem Kreislauf entnommen werden, ohne den Kreislaufprozess wesentlich zu beeinträchtigen. Beispielsweise können die gewünschten Elemente durch (selektive) Adsorption an festen Adsorbern, durch Ionenaustausch, durch Extraktion (beispielsweise mit einem geeigneten organischen Lösungsmittel) oder durch Komplexbildung (wobei sich die Löslichkeitseigenschaften verändern) erfolgen.

Vorzugsweise wird dieser Abreicherungsschritt an einer Stelle des Kreislaufs vorgenommen, welche für den Erfolg der Abreicherung in besonderer Weise geeignet ist, beispielweise aufgrund der an dieser Stelle vorherrschenden Prozessparameter Druck, Säurekonzentration, Konzentration von Begleitelementen, elektrochemisches Potential oder Temperatur. Auch eine gezielte Beeinflussung einer dieser Parameter oder eine gleichzeitige Veränderung mehrerer dieser Parameter kann hilfreich sein, um eine möglichst effiziente Abtrennung der gewünschten Elemente von den unerwünschten zu erreichen.

Der beschriebene Stoffkreislauf ist in Figur 1 dargestellt und beinhaltet die folgenden Schritte:
Aufschluss der titanhaltigen Rohstoffe mit Schwefelsäure => Reduktion des dreiwertigen Eisens zu Fe²⁺ => Kristallisation und Abtrennung von Eisensulfat-Heptahydrat => Hydrolyse und Abtrennung der Dünnsäure vom erhaltenen Titanoxidhydrat => Dünnsäureaufkonzentrierung (auf 50 bis 75% H₂SO₄) => Filtersalz(abtrennung) => weitere Aufkonzentrierung der H₂SO₄ auf 75 bis 90% => Wiederverwendung im Aufschluss. Die hier im Kreislauf umlaufende Hauptkomponente ist Schwefelsäure.

Die Einbringung von Stoffen in den Kreislauf der Herstellung von Titandioxid nach dem Sulfatverfahren erfolgt
- beim Verfahrensschritt des Aufschlusses in Form von titanhaltigen Rohstoffen (Ilmenit oder Titanschlacke sowie ein Anteil an frischer Schwefelsäure, um Verluste auszugleichen)
- sowie beim Verfahrensschritt der Reduktion der Schwarzlösung in Form von metallischem Eisen.

Die Austragung von Stoffen aus dem Kreislauf erfolgt
- beim Verfahrensschritt der Kristallisation und Abtrennung von Eisensulfat-Heptahydrat,
- beim Verfahrensschritt der Hydrolyse und Abtrennung von Titanoxidhydrat
- sowie beim Verfahrensschritt der Abtrennung von Filtersalz mit der Hauptkomponente Eisensulfat-Monohydrat.

In einer Ausführungsform der Erfindung ist daher das erfindungsgemäße Nebenprodukt der Titandioxidherstellung nach dem Sulfatverfahren aus dem die gewünschten Elemente/Elementverbindungen gewonnen werden, eine Dünnsäure, vorzugsweise eine in obiger Kreislauffahrweise verwendete und daher mit den gewünschten Elementen/Elementverbindungen angereicherte Dünnsäure. Diese kann auch in bereits aufkonzentrierter Form vorliegen.

Ein derartiger Anreicherungseffekt durch Kreislauffahrweise tritt bei der TiO₂-Herstellung nach dem Chloridverfahren nicht auf.

Um eine vorzeitige Abtrennung der gewünschten Elemente, insbesondere durch Ausfällung zu vermeiden, wird während der Akkumulierung an allen Stellen des Kreislaufprozesses der pH-Wert bei <4, bevorzugt <2,5, besonders bevorzugt <1,5 gehalten. Dadurch wird sichergestellt, dass es zu einer Akkumulierung kommt und die Verluste durch vorzeitige Ausfällung werden gering gehalten.

In verschiedenen Ausführungsformen des Verfahrens liegen während der Akkumulierung in allen Abschnitten des Kreislaufprozesses schwefelsaure Lösungen vor.

In dem Kreislaufprozess gibt es mindestens eine Eintragstelle für das eine oder die mehreren Element(e) und/oder Verbindung(en) davon und mindestens eine Austragstelle für Eisenverbindungen und andere Metallverbindungen, die nicht zu den zu gewinnenden Elementen gehören. Bei der Eintragsstelle kann es sich um den Aufschlussreaktor handeln, der mit den titanhaltigen Materialien, üblicherweise Ilmenit und/oder Titanschlacke, beschickt wird, wobei diese Materialien die gewünschten Elemente oder Elementverbindungen als Spuren enthalten. Alternativ oder zusätzlich können über den Aufschlussreaktor auch andere Materialien, die die gewünschten Elemente oder Elementverbindungen enthalten, zugesetzt werden. Beispiele für solche Materialien werden unten genannt. Die Austragung der gewünschten Element(e) und/oder Verbindung(en) davon kann während der Akkumulationsphase gänzlich fehlen und erst in der Abreicherungsphase aktiviert werden.

In verschiedenen Ausführungsformen des Verfahrens erfolgt die Eintragung des einen oder der mehreren Element(e) und/oder Verbindung(en) davon während der Akkumulierung durch den Aufschluss titanhaltiger Materialien, wie beispielsweise Ilmenit oder Titanschlacke.

In dem erfindungsgemäßen Verfahren kann die Akkumulierungsphase über mindestens einen Tag, bevorzugt über mindestens vier Wochen, besonders bevorzugt über mindestens 20 Wochen durchgeführt werden. Eine derart lange Akkumulierungsphase führt zu einer deutlichen Erhöhung der Konzentration der Elemente/Elementverbindungen in den schwefelsauren Lösungen, z.B. der Dünnsäure, verglichen zu einem Prozess in dem keine Rückführung der Dünnsäure bzw. keine Akkumulierung vorgenommen wird.

Die Abreicherung kann gemäß verschiedenen Ausführungsformen ohne Unterbrechung des Kreislaufprozesses erfolgen, indem an einer oder mehreren Stellen im Kreislauf eine Abtrennung einer Fraktion, die das eine oder die mehreren Element(e) und/oder Verbindung(en) davon enthält, vorgenommen wird.

In einem anderen Verfahren zur Gewinnung von einem oder mehreren Element(en) und/oder Verbindung(en) davon aus Zwischen- oder Nebenprodukten der Herstellung von Titandioxid nach dem Sulfatverfahren, wird zusätzlich zu den Ti-haltigen Rohstoffen, welche bei der Herstellung von Titandioxid nach dem Sulfatverfahren üblicherweise als Ausgangsstoffe verwendet werden, wie beispielsweise Ilmenit oder Titanschlacke, mindestens eine weitere Zusammensetzung, die das eine oder die mehreren Element(e) und/oder Verbindungen davon enthält, in den Prozess zur Herstellung von Titandioxid eingebracht.

Beide Verfahren können auch kombiniert werden, d.h. in dem Verfahren mit Säurekreislauf kann zusätzlich eine weitere Zusammensetzung, die die gewünschten Elemente oder Verbindungen davon enthält, an geeigneter Stelle eingebracht werden. Dadurch lässt sich die Ausbeute an den gewünschten Elementen weiter erhöhen.

Diese weitere Zusammensetzung, die das eine oder die mehreren Element(e) und/oder Verbindung(en) davon enthält, kann beispielsweise in Form von natürlichen mineralischen Rohstoffen oder Fraktionen davon, industriellen Nebenprodukten oder metallhaltigen Abfallprodukten in die bei der Herstellung von Titandioxid nach dem Sulfatverfahren verwendeten schwefelsauren Lösungen, beispielsweise in den Säurekreislauf, eingebracht werden.

In verschiedenen Ausrührungsformen werden die natürlichen mineralischen Rohstoffe oder Fraktionen davon, industriellen Nebenprodukte oder metallhaltigen Abfallprodukte vor dem Einbringen in den bei der Herstellung von Titandioxid nach dem Sulfatverfahren verwendeten Säurekreislauf mit Schwefelsäure, Dünnsäure oder einer durch Aufkonzentrierung der Dünnsäure hergestellten schwefelsauren Lösung in Kontakt gebracht und die daraus resultierende Lösung in den Säurekreislauf eingebracht. In diesen Ausführungsformen dient die Dünnsäure oder die daraus erhaltenen Schwefelsäuren oder frische Schwefelsäure zur Eluierung der gewünschten Elemente/- verbindungen, insbesondere Metalle, aus den entsprechenden Materialien.

Alternativ können die natürlichen mineralischen Rohstoffe, industriellen Nebenprodukte, metallhaltigen Abfallprodukte oder Fraktionen oder Aufarbeitungsprodukte davon vor dem Einbringen in die bei der Herstellung von Titandioxid nach dem Sulfatverfahren verwendeten schwefelsauren Lösungen, insbesondere den Säurekreislauf, mit Salzsäure, Salpetersäure oder einer anderen Säure in Kontakt gebracht und zumindest teilweise in Lösung gebracht werden und anschließend mit Schwefelsäure, Dünnsäure oder einer durch Aufkonzentrierung der Dünnsäure hergestellten schwefelsauren Lösung umgesetzt werden und dabei die Anionen der zum Lösen verwendeten Säure durch Sulfationen ersetzt und, bevorzugt durch Destillation oder Strippen, zu mindestens 90% entfernt werden.

In verschiedenen Ausführungsformen umfassen die metallhaltigen Abfallprodukte metallchloridhaltige Abfälle aus der Herstellung von Titandioxid nach dem Chloridverfahren. Die bei der Umsetzung dieser Abfallprodukte mit Schwefelsäure, Dünnsäure oder einer durch Aufkonzentrierung der Dünnsäure hergestellten schwefelsauren Lösung entstehende Salzsäure wird dabei durch Destillation oder Strippen entfernt bevor dann die resultierende schwefelsaure Lösung, die die in Sulfate überführten Metalle enthält, in die schwefelsauren Lösungen des Sulfatverfahrens, beispielsweise den Säurekreislauf, eingebracht wird. Die Salzsäure wird dabei vor dem Einbringen in den Säurekreislauf vorzugsweise zu mindestens 90% entfernt.

Die metallhaltigen Abfallprodukte können metallhaltigen Schrott, vorzugsweise Elektronikschrott, Gießereistäube, bevorzugt Gießereistäube aus der Sphärogussherstellung, oder Rotschlamm aus der Aluminiumproduktion nach dem Bayer-Verfahren umfassen. Ebenfalls erfasst sind Fraktionen und/oder Aufarbeitungsprodukte der genannten Materialien. Bei dem "Rotschlamm" handelt es sich um die nach dem Aufschluss von Bauxit mit NaOH und die Abtrennung wasserlöslicher Aluminate zurückbleibenden unlöslichen Rückstände im Form einer wässrigen Dispersion. Als Feststoffe enthält der Rotschlamm vor allem Eisen- und Titanoxide sowie verschiedene Kieselsäureverbindungen. Daneben enthält er noch einige Seltenerdverbindungen. Da der Rotschlamm stark alkalisch ist, kann er zur Neutralisation von schwefelsauren Lösungen aus dem Sulfatverfahren, beispielsweise der Dünnsäure eingesetzt werden.

Die metallhaltigen Abfallprodukte können auch metallhaltige Gebrauchtschwefelsäure aus anderen Prozessen als der Titandioxid-Herstellung umfassen.

Das eine oder die mehreren Element(e) und/oder Verbindung(en) davon, die in Form von natürlichen mineralischen Rohstoffen oder Fraktionen davon, industriellen Nebenprodukten oder metallhaltigen Abfallprodukten zusätzlich in die schwefelsauren Lösungen eingebracht werden, können in den bei der Herstellung von Titandioxid nach dem Sulfatverfahren verwendeten Aufschlussreaktor eingebracht werden.

In weiteren Ausführungsformen der Erfindung kann eine weitere Einbringung von Stoffen in diesen Kreislauf zur gezielten Gewinnung von bestimmten Elementen bzw. deren Verbindungen beispielsweise wie folgt erfolgen:
- beim Verfahrensschritt des Aufschlusses in Form einer Zugabe von seltenerdmetallhaltigen Materialien, z.B. natürlichen mineralischen Rohstoffen oder geeigneten Elektronikschrottfraktionen
- vor dem Verfahrensschritt der Filtersalzabtrennung in Form einer Zugabe von Gießereistäuben
- vor oder während dem Verfahrensschritt der Dünnsäureaufkonzentrierung in Form einer Zugabe von Gießereistäuben oder Rotschlamm zur teilweisen Neutralisation der Dünnsäure
- nach dem Verfahrensschritt der Dünnsäureaufkonzentrierung in Form einer Zugabe von Metallchlorid-Abfällen aus dem Chloridverfahren, wobei hierbei in der Regel eine vorherige Entfernung der dabei als Reaktionsprodukt entstehenden Salzsäure in Form eines zusätzlichen Verfahrensschrittes wie z.B. Destillation oder Strippen erforderlich ist.

Bei den erwähnten Beispielen ist es aber auch möglich die Materialien, welche eigens zur gezielten Gewinnung von bestimmten Elementen bzw. deren Verbindungen Verwendung finden sollen, zunächst separat aufzulösen, umzusetzen oder aufzuschließen und danach in Form einer Lösung in den Kreislaufprozess einzubringen. Ort und Art der Zugabe sind dabei abhängig von der Löslichkeit bzw. der Reaktivität der zugesetzten Materialien, von Art und Menge der eingebrachten unerwünschten Anteile (und der Möglichkeit einer geeigneten Austragung derselben), von Auswirkungen auf die Qualität des Titandioxids oder der Eisensulfate, von verfahrenstechnischen Rahmenbedingungen (Dosierbarkeit, Reaktorgröße, Arbeitssicherheit, usw.) und wirtschaftlichen Aspekten.

Die in den erfindungsgemäßen Verfahren gewonnenen Elemente oder Elementverbindungen werden ausgewählt aus der Gruppe bestehend aus Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, At, Fr, Ra, Ac, Th, Pa, U, Pu und Verbindungen davon. In verschiedenen Ausführungsformen der Erfindung handelt es sich bei den Elementen und Elementverbindungen um Metalle und Metallverbindungen, beispielsweise Metallsalze.

Bei den erfindungsgemäß gewonnenen Metallen kann es sich um Spurenelemente handeln. Als "Spurenelemente" werden hierin die Elemente bezeichnet, welche in natürlichen Lagerstätten in der Regel nur in geringer Konzentration oder selten anzufinden sind. Dementsprechend werden hierin die folgenden Elemente als Spurenelemente bezeichnet: Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, At, Fr, Ra, Ac, Th, Pa, U und Pu. In verschiedenen Ausführungsformen umfassen die Spurenelemente von besonderem Interesse die Metalle der Seltenen Erden Sc, Y, La, Ce, Pr, Nd, Pm, Sm, Eu, Gd, Tb, Dy, Ho, Er, Tm, Yb, Lu sowie die Elemente Nb, Ta, Ga und In.

Vorzugsweise erfolgt die Gewinnung von Elementen und/oder Elementverbindungen, beispielsweise Metallen und/oder Metallverbindungen, insbesondere Seltenerdmetallen oder Verbindungen davon, aus den Zwischen- oder Nebenprodukten der Titandioxidherstellung in der Art, dass nicht ein einzelnes Element oder Elementverbindung isoliert oder separiert wird, sondern mehrere Elemente oder Elementverbindungen gleichzeitig separiert werden. Aufgrund der Synergie verbessert sich die Wirtschaftlichkeit dabei erheblich. Insbesondere bietet sich eine gleichzeitige Abtrennung anderer Elemente oder Elementverbindungen, insbesondere Metalle oder Metallverbindungen, mit Vanadium oder Vanadiumverbindungen an, da der Wert des Vanadiums bereits einen Großteil der Verfahrenskosten abdeckt. In diesem Fall ist es vorteilhaft, das aus der Spaltung von Filtersalz stammende Eisenoxid (Abbrand) als Ausgangsmaterial für die Abtrennung und Gewinnung der neben Vanadium gewünschten Elemente oder Verbindungen zu verwenden.

Bei den aus den Zwischen- oder Nebenprodukten der Titandioxidherstellung gewonnenen Metallen oder Metallverbindungen kann es sich um eines oder mehrere aus der Gruppe bestehend aus Sc, Y, La, Ce, Pr, Nd, Pm, Sm, Eu, Gd, Tb, Dy, Ho, Er, Tm, Yb, Lu, Cr, V, Nb, Ta, Ga, In und Verbindungen davon, insbesondere Salzen davon, handeln.

Bei den Metallen oder Metallverbindungen kann es sich in verschiedenen Ausführungsformen auch um Ga, Sc, Y, La, Ce, Pr, Nd, Pm, Sm, Eu, Gd, Tb, Dy, Ho, Er, Tm, Yb, Lu und Verbindungen davon handeln.

Wenn die Verbindungen die entsprechenden Salze der Elemente sind, handelt es sich bei den Salzen im Allgemeinen um anorganische Salze der vorgenannten Elemente/Metalle, insbesondere die Sulfate. Die Elemente/Metalle können aber auch in Form der Oxide oder Hydroxide gewonnen werden.

In bestimmten Ausführungsformen handelt es sich bei den Seltenerdmetallen um Scandium und/oder Neodym und/oder Cer und/oder deren Salze.

In verschiedenen Ausführungsformen der Erfindung sind die folgenden Elemente ausgenommen: Titan und Eisen, sowie deren Salze. In weiteren Ausführungsformen sind die folgenden Elemente ausgenommen: Li, Na, Mg, Al, K, Ca, Ti, Mn und Fe. In bestimmten Ausführungsformen der Erfindung umfasst das beanspruchte Verfahren daher Schritte zur Abtrennung der unerwünschten Elemente.

Wenn die genannten Elemente in Form von Verbindungen gewonnen werden, können auch die ausgeschlossenen oder nicht genannten Elemente enthalten sein, wie z.B. Schwefel in Form des Sulfatanions. Alle unerwünschten Metalle können optional in einem Folgeschritt abgetrennt werden.

In verschiedenen Ausführungsformen der Erfindung liegen das/die Element(e)/Metall(e) und/oder Verbindungen davon in löslicher oder gelöster Form vor. Werden Zwischen-oder Nebenprodukte aus der Titandioxidherstellung nach dem Sulfatverfahren verwendet, können die Element(e)/Metall(e) und/oder Verbindungen davon, insbesondere die Salze davon, beispielsweise gelöst in einer Schwefelsäure-haltigen wässrigen Lösung, beispielsweise der Dünnsäure vorliegen. Alternativ können sie in festen, aber wasserlöslichen Verbindungen, beispielsweise in Filtersalz, vorliegen.

In verschiedenen Ausführungsformen der Erfindung sind die verwendeten Zwischen- oder Nebenprodukte solche, die bei der Titandioxidherstellung nach dem Sulfatverfahren anfallen. Derartige Nebenprodukte schließen ein, sind aber nicht beschränkt auf Filtersalz, Aufschlussrückstand und/oder Dünnsäure aus der Herstellung von Titandioxid nach dem Sulfatverfahren. Ebenfalls erfasst werden durch Aufkonzentrierung der Dünnsäure erhältliche schwefelsaure Lösungen. Ein Beispiel für ein Zwischenprodukt im Sinne der Erfindung ist die Schwarzlösung, die nach Aufschluss des titanhaltigen Ausgangsmaterials und Abtrennung der unlöslichen Rückstände erhalten wird.

Alternativ kann das Nebenprodukt Abbrand sein, der durch Abrösten des Filtersalzes erhalten wird (Filtersalzspaltung) und aus welchem die Elemente und/oder Elementverbindungen herausgelöst werden können. Geeignete Lösungsmittel schließen verschiedene Säuren ein und sind dem Fachmann bekannt.

"Filtersalz" wie hierin verwendet, bezieht sich auf den festen Rückstand, der nach Aufkonzentrierung der Dünnsäure auf 50 bis 75% H₂SO₄ (H₂SO₄-Konzentration in der Flüssigphase) und Abtrennung der Schwefelsäure erhalten wird. Das Filtersalz enthält die Metalle im Wesentlichen in Form von Sulfaten. Durch nachfolgendes Abrösten (Filtersalzspaltung) können die Metallsulfate zersetzt und entfernt werden (und das SO₂ beispielsweise für die Herstellung von Schwefelsäure verwendet werden), um die Metalle als Oxide zu erhalten. Die so erhaltene Mischung aus Metalloxiden besteht im Wesentlichen aus Eisen(III)oxid mit einem geringeren Anteil an anderen Metalloxiden, einschließlich Seltenerd-Metalloxide.

"Dünnsäure", wie hierin verwendet, bezieht sich auf verdünnte Schwefelsäure wie sie bei der Herstellung von Titandioxid nach dem Sulfatverfahren nach dem Verfahrensschritt der Hydrolyse und der Abtrennung des Roh-TiO₂ anfällt.

"Aufschlussrückstand", wie hierin verwendet, bezieht sich auf die festen, unlöslichen Rückstände, die nach dem Aufschluss des titanhaltigen Erzes, üblicherweise Ilmenit oder Titanschlacke, mit Schwefelsäure zurückbleiben.

"Schwarzlösung", wie hierin verwendet, bezieht sich auf die schwefelsaure Lösung des Aufschlusses nach Abtrennung aller unlöslichen Materialien, d.h. insbesondere des Aufschlussrückstandes. Als Schwarzlösung wird somit die durch Auflösung des titanhaltigen Ausgangsstoffes mit Schwefelsäure erhaltene Lösung nach Abtrennung aller unlöslichen Feststoffe verstanden.

Die Elemente oder Elementverbindungen können aus den Neben- oder Zwischenprodukten, insbesondere aus Dünnsäure, durch Konzentration von Dünnsäure erhaltenen Lösungen und Filtersalz, oder aus Abbrand nach Herauslösen durch fraktionierte Fällung, Extraktion, Komplexbildung oder durch selektive Adsorption, bevorzugt mit Hilfe von Ionenaustauschern, erhalten werden.

In einer Ausführungsform erfolgt die Gewinnung von Elementen oder Elementverbindungen, vorzugsweise Metallen oder Metallverbindungen, insbesondere Seltenerd-Verbindungen, aus Filtersalz, weil einerseits die Konzentration von Vanadium sowie anderer Metalle relativ hoch ist und andererseits diese Stoffe in löslicher Form vorliegen. Vorzugsweise wird dabei eine schrittweise Neutralisierung des Filtersalzes mit Abtrennung der ausgefällten Metallverbindungen vorgenommen. Dabei werden zuerst Ti, Cr und V ausgefällt. Sc, Ce und Nd bleiben zunächst in Lösung und können dann in einem folgenden Schritt abgetrennt werden.

In den erfindungsgemäßen Verfahren, kann die Abtrennung/Abreicherung des einen oder der mehreren Element(e) und/oder Verbindung(en) davon kann durch die Abtrennung von einer Zusammensetzung vorgenommen werden, in der Eisen den größten Masseanteil der enthaltenen Metall-Komponenten ausmacht, z.B. Filtersalz. Alternativ kann es sich bei einer solchen Zusammensetzung um die Dünnsäure handeln.

Die Abreicherung kann durch Adsorption, Ionenaustausch, Extraktion, Komplexbildung, Fällung durch teilweise oder vollständige Neutralisation oder Kristallisation, bevorzugt fraktionierte Kristallisation, vorgenommen werden.

Eine derartige Abreicherung kann mit einer abgetrennten Fraktion oder alternativ im laufenden Prozess erfolgen. Bei einer Abreicherung im laufenden Prozess werden vorzugsweise Adsorption oder Ionenaustausch verwendet. Bei einer Abreicherung aus einer abgetrennten Fraktion können alle genannten Verfahren eingesetzt werden. In einer Ausführungsform kann zur Abreicherung des einen oder der mehreren Element(e) und/oder Verbindung(en) davon ein adsorbierender Feststoff, bevorzugt ein Titandioxid, wie z.B. feinteiliges Titandioxid, oder ein Titanoxidhydrat, vorzugsweise mit einer BET-Oberfläche von mehr als 80 g/m², noch bevorzugter mehr als 150 g/m², verwendet werden. Dieser adsorbierende Feststoff kann dabei im laufenden Verfahren eingesetzt werden indem er kontinuierlich von einer der im Sulfatverfahren verwendeten schwefelsauren Lösungen durchströmt wird. Alternativ kann der Feststoff mehrfach mit einer der im Sulfatverfahren verwendeten schwefelsauren Lösungen in Kontakt gebracht und anschließend wieder von dieser abgetrennt werden. Der Feststoff zur Adsorption kann in verschiedenen Ausführungsformen mit einer Phosphorverbindung beschichtet sein.

Die Abreicherung des einen oder der mehreren Element(e) und/oder Verbindung(en) davon erfolgt bevorzugt bei einer Schwefelsäurekonzentration von weniger als 30 Gew.-%. In verschiedenen Ausführungsformen des Verfahrens kann die Abreicherung aus der titanhaltigen Schwarzlösung erfolgen.

Falls zur Abreicherung eine Extraktion eingesetzt wird, kann die Extraktion mit einem organischen Lösemittel erfolgen. Die Abreicherung kann ebenfalls über einen Ionenaustauscher erfolgen. Das konkrete Abreicherungsverfahren kann in Abhängigkeit der abzutrennenden Elemente ausgewählt werden. Solche Verfahren und deren Durchführung sind dem Fachmann bekannt.

In verschiedenen Ausführungsformen der Erfindung kann zur Abtrennung/Abreicherung das elektrochemische Potential der im Sulfatverfahren verwendeten schwefelsauren Lösungen vor dem Abtrennungs-/Abreicherungsschritt durch Zugabe von Ti³⁺-Ionen oder Fe³⁺-Ionen erhöht oder erniedrigt werden.

Die Erfindung betrifft ferner ein Verfahren zur Gewinnung von einem oder mehreren Element(en) und/oder Verbindung(en) davon aus Zwischen- oder Nebenprodukten der Herstellung von Titandioxid nach dem Sulfatverfahren, wobei das eine oder die mehreren Element(e) und/oder Verbindung(en) davon ausgewählt wird/werden aus der Gruppe bestehend aus Ga, Sc, Y, La, Ce, Pr, Nd, Pm, Sm, Eu, Gd, Tb, Dy, Ho, Er, Tm, Yb, Lu und Verbindungen davon.

In anderen Verfahren gemäß der Erfindung sind die Nebenprodukte solche aus der Titandioxidherstellung nach dem Chloridverfahren. Dabei können das eine oder die mehreren Element(e) und/oder Verbindung(en) davon nach Abtrennung des Titantetrachlorids aus den verbleibenden Rückständen des Chlorierungsschritts durch Fällung, Extraktion, Komplexbildung oder durch selektive Adsorption, bevorzugt mit Hilfe von Ionenaustauschern, erhalten werden. Vorteilhaft beim Chloridverfahren ist die teilweise höhere Konzentration der Metalle der Seltenen Erden in den abgeschiedenen und abgetrennten Metallchloriden. Die Erfindung betrifft daher auch ein Verfahren zur Gewinnung von einem oder mehreren Element(en) und/oder Verbindung(en) aus bei der Herstellung von Titandioxid nach dem Chloridverfahren anfallenden Zwischen- oder Nebenprodukten, wobei das eine oder die mehreren Element(e) oder Verbindung(en) davon ausgewählt wird/werden aus der Gruppe bestehend aus Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Tl, Pb, Bi, Po, At, Fr, Ra, Ac, Th, Pa, U, Pu und Verbindungen davon. Die derart gewonnenen Elemente sind die gleichen wie sie oben im Zusammenhang mit dem Sulfatverfahren offenbart worden sind.

Ferner kann durch die Verwendung von Dünnsäure die Verwendung von reiner Schwefelsäure, d.h. insbesondere industrieller Schwefelsäure, vermieden werden. Für diese Verwendung kann die Dünnsäure vor der Verwendung aufkonzentriert und die ausgefällten Feststoffe abgetrennt werden. Von den bekannten Verfahren zur Gewinnung des entsprechenden Metalls unterscheiden sich die erfindungsgemäßen Verfahren daher insbesondere durch die Verwendung von Dünnsäure anstelle der üblicherweise verwendeten industriellen Schwefelsäure.

Die Materialien, die bei diesem Eluierungsschritt eingesetzt werden, können alle Materialien einschließen, die die gewünschten Elemente oder Verbindungen davon enthalten, insbesondere natürliche mineralische Rohstoffe, wie z. B. Ilmenit, Titanschlacke oder andere metallhaltige Erze, oder Fraktionen davon oder industrielle Nebenprodukte oder metallhaltige Abfallprodukte, wie beispielsweise metallhaltiger Schrott, insbesondere Elektronikschrott. Ebenfalls geeignet sind Gießereistäube, metallchloridhaltige Abfälle aus der Titandioxidproduktion nach dem Chloridverfahren, und Abfälle aus der Aluminiumgewinnung.

Weitere Ausführungsformen der Erfindung sind in den Ansprüchen und den Beispielen enthalten. Die folgenden Beispiele dienen der Veranschaulichung der Erfindung, wobei die Erfindung nicht auf diese speziellen Ausführungsformen beschränkt ist.

### Beispiele

### Beispiel 1:

Beim Herstellprozess von Titandioxid nach dem Sulfatverfahren mit Aufkonzentrierung der Dünnsäure, Abtrennung einer eisensulfathaltigen Ausfällung (= Filtersalz) und Wiederverwendung der aufkonzentrierten Schwefelsäure für den Aufschluss titanhaltiger Rohstoffe wird nach einer mindestens 8-wöchigen Kreislauffahrweise zur Akkumulierung von Seltenerdverbindungen eine Teilmenge der Dünnsäure (in der die Elemente Sc, Ce und Nd in Konzentrationen zwischen 5 und 50 ppm enthalten sind, was einer Konzentration bezogen auf die gesamten Kationen von 100 bis 1000 ppm entspricht) entnommen und die Seltenerdverbindungen mit Tributylphosphat extrahiert.

### Beispiel 2:

Beim Herstellprozess von Titandioxid nach dem Sulfatverfahren mit Aufkonzentrierung der Dünnsäure, Abtrennung einer eisensulfathaltigen Ausfällung (= Filtersalz) und Wiederverwendung der aufkonzentrierten Schwefelsäure für den Aufschluss titanhaltiger Rohstoffe wird nach einer mindestens 8-wöchigen Kreislauffahrweise zur Akkumulierung von Seltenerdverbindungen eine Teilmenge der 65%igen Schwefelsäure, die nach Abtrennung des Filtersalzes erhalten wird, entnommen und die Seltenerdverbindungen mit Tributylphosphat extrahiert. Da in dieser 65%igen Schwefelsäure nur noch geringe Mengen an Eisen sowie anderer unerwünschter Elemente (Ti, Al, Mg, Mn) enthalten ist, ist die Reinheit der abgetrennten Seltenerdverbindungen deutlich höher als in Beispiel 1.

### Beispiel 3:

Bei der Sphärogussherstellung wird eine Schmelze, welche 0,4 Gew.% Cer und geringe Mengen an Scandium als Kristallisationskeimbildner enthält, mit metallischem Magnesium oder magnesiumhaltigen Reagenzien zur Entschwefelung behandelt. Der bei der Behandlung mit Magnesium entstehende Rauch wird als Cer-haltiger Gießereistaub abgetrennt und von den übrigen Gießereistäuben, welche wenig Cer enthalten, separat gehalten.

Dieser Cer-haltige Gießereistaub wird der Dünnsäure zugesetzt, wobei Cer und Scandium in Lösung geht und sich im Säurekreislauf anreichert, während Eisen über das Filtersalz aus dem Kreislauf entfernt wird. Die Zugabe des Gießereistaubs wird mehrfach wiederholt, wodurch eine weitere Anreicherung von Cer und Scandium erreicht wird.

Die Abtrennung erfolgt aus der Dünnsäure (vor einem eventuellen weiteren Zusatz von Cer-haltigem Gießereistaub) mit Hilfe eines Ionentauschers.

### Beispiel 4:

Seltenerdmetallhaltige Leuchtstoffe aus Lampen werden mit der 65%igen Schwefelsäure, die nach Abtrennung des Filtersalzes erhalten wird, bei Temperaturen zwischen 60 und 100°C umgesetzt und anschließend die Seltenerdverbindungen über einen Ionenaustauscher abgetrennt.

### Beispiel 5:

Der bei der Produktion von Tonerde nach dem Bayerverfahren anfallende Rotschlamm, welcher neben Natronlauge (ca. 2% Na₂O im Feststoff) auch Seltenerd-Elemente enthält (insbesondere Ce, La und Y in Konzentrationen oberhalb von 100 ppm), wird mit Dünnsäure aus dem TiO₂-Sulfatprozess umgesetzt. Die Mengenverhältnisse werden dabei so gewählt, dass ein pH-Wert von etwa 6,5 erreicht wird. Nach Abtrennung der ungelösten Feststoffanteile durch Filtration wird eine Flüssigphase erhalten, welche die löslichen Sulfate der Seltenerd-Elemente enthält.

## Patentansprüche

1. Verfahren zur Gewinnung von einem oder mehreren Element(en) und/oder Verbindung(en) davon aus Zwischen- oder Nebenprodukten der Herstellung von Titandioxid nach dem Sulfatverfahren, wobei die nach dem Verfahrensschritt der Hydrolyse und der Abtrennung des Roh-TiO₂ anfallende Dünnsäure in einem Kreislaufprozess nach ein- oder mehrmaliger Aufkonzentrierung und dem Abtrennen einer eisensulfathaltigen Ausfällung zum Aufschluss titanhaltiger Materialien wiederverwendet wird, so dass eine Akkumulierung des einen oder der mehreren Element(e) und/oder Verbindung(en) davon in den im Sulfatverfahren verwendeten schwefelsauren Lösungen erfolgt, und wobei nach der Akkumulierung eine Abreicherung des einen oder der mehreren Element(e) und/oder Verbindung(en) davon vorgenommen wird, indem das eine oder die mehreren Element(e) und/oder Verbindung(en) davon durch ein geeignetes Trennverfahren aus dem Kreislauf ganz oder teilweise entfernt werden, wobei das eine oder die mehreren Element(e) oder Verbindung(en) davon ausgewählt wird/werden aus der Gruppe bestehend aus Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd Tb, Dy, Ho, Er, Tm, Yb, Lu, Hf, Ta, W, Re, Os, Ir, Pt, Au, Hg, TI, Pb, Bi, Po, At, Fr, Ra, Ac, Th, Pa, U, Pu und Verbindungen davon.

2. Verfahren nach Anspruch 1, wobei in dem Kreislaufprozess zeitlich alternierend eine Akkumulierung und Abreicherung des einen oder der mehreren Element(e) und/oder Verbindung(en) davon erfolgt.

3. Verfahren nach Anspruch 1 oder 2, wobei die Abreicherung des einen oder der mehreren Element(e) und/oder Verbindung(en) davon durch die Abtrennung von einer Zusammensetzung vorgenommen wird, in der Eisen den größten Masseanteil der enthaltenen Metall-Komponenten aufweist, wobei die Zusammensetzung vorzugsweise Filtersalz ist.

4. Verfahren nach einem der Ansprüche 1 bis 3, wobei die Akkumulierung über mindestens einen Tag, bevorzugt über mindestens vier Wochen, besonders bevorzugt über mindestens 20 Wochen durchgeführt wird.

5. Verfahren nach einem der Ansprüche 1 bis 4, wobei die Abreicherung ohne Unterbrechung des Kreislaufprozesses erfolgt, indem an einer oder mehreren Stellen im Kreislauf eine Abtrennung einer Fraktion, die das eine oder die mehreren Element(e) und/oder Verbindung(en) davon enthält, vorgenommen wird.

6. Verfahren zur Gewinnung von einem oder mehreren Element(en) und/oder Verbindung(en) davon aus Zwischen- oder Nebenprodukten der Herstellung von Titandioxid nach dem Sulfatverfahren, wobei zusätzlich zu den Ti-haltigen Rohstoffen, welche bei der Herstellung von Titandioxid nach dem Sulfatverfahren üblicherweise als Ausgangsstoffe verwendet werden, mindestens eine weitere Zusammensetzung, die das eine oder die mehreren Element(e) und/oder Verbindungen davon enthalten, in den Prozess zur Herstellung von Titandioxid eingebracht wird, und das eine oder die mehreren Element(e) und/oder Verbindungen davon aus Zwischen- oder Nebenprodukten der Herstellung von Titandioxid abgetrennt werden, wobei das eine oder die mehreren Element(e) oder Verbindung(en) davon ausgewählt wird/werden aus der Gruppe bestehend aus Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd Tb, Dy, Ho, Er, Tm, Yb, Lu, Hf, Ta, W, Re, Os, Ir, Pt, Au, Hg, Tl, Pb, Bi, Po, At, Fr, Ra, Ac, Th, Pa, U, Pu und Verbindungen davon.

7. Verfahren nach einem der Ansprüche 1 bis 5, wobei zusätzlich zu den Ti-haltigen Rohstoffen, welche bei der Herstellung von Titandioxid nach dem Sulfatverfahren üblicherweise als Ausgangsstoffe verwendet werden, mindestens eine weitere Zusammensetzung, die das eine oder die mehreren Element(e) und/oder Verbindungen davon enthalten, in den Prozess zur Herstellung von Titandioxid eingebracht wird, und das eine oder die mehreren Element(e) und/oder Verbindungen davon aus Zwischen- oder Nebenprodukten der Herstellung von Titandioxid abgetrennt werden.

8. Verfahren nach einem der Ansprüche 6 oder 7, wobei die Zusammensetzung in Form von natürlichen mineralischen Rohstoffen, industriellen Nebenprodukten, metallhaltigen Abfallprodukten oder Fraktionen oder Aufarbeitungsprodukten dieser Materialien in die bei der Herstellung von Titandioxid nach dem Sulfatverfahren verwendeten schwefelsauren Lösungen eingebracht wird, wobei das Einbringen optional über den Aufschlussreaktor erfolgt.

9. Verfahren nach Anspruch 8, wobei die natürlichen mineralischen Rohstoffe, industriellen Nebenprodukte, metallhaltigen Abfallprodukte oder Fraktionen oder Aufarbeitungsprodukte dieser Materialien vor dem Einbringen in den bei der Herstellung von Titandioxid nach dem Sulfatverfahren verwendeten Säurekreislauf:
- mit Schwefelsäure, bevorzugt Dünnsäure oder einer durch Aufkonzentrierung der Dünnsäure hergestellten schwefelsauren Lösung, in Kontakt gebracht werden und dann die dadurch erhaltene Lösung in den Säurekreislauf eingebracht wird, oder
- mit Salzsäure, Salpetersäure oder einer anderen Säure in Kontakt gebracht und zumindest teilweise in Lösung gebracht werden und anschließend mit Schwefelsäure, Dünnsäure oder einer durch Aufkonzentrierung der Dünnsäure hergestellten schwefelsauren Lösung umgesetzt werden und dabei die Anionen der zum Lösen verwendeten Säure durch Sulfationen ersetzt und, bevorzugt durch Destillation oder Strippen, zu mindestens 90% entfernt werden.

10. Verfahren nach einem der Ansprüche 8 oder 9, wobei vor dem Einbringen in den Säurekreislauf die bei dem in Kontakt bringen mit Schwefelsäure, Dünnsäure oder einer durch Aufkonzentrierung der Dünnsäure hergestellten schwefelsauren Lösung entstehende Salzsäure, bevorzugt durch Destillation oder Strippen, zu mindestens 90% entfernt wird, wobei die metallhaltigen Abfallprodukte umfassen:
- metallchloridhaltige Abfälle aus der Herstellung von Titandioxid nach dem Chloridverfahren,
- metallhaltigen Schrott, vorzugsweise Elektronikschrott, oder Aufarbeitungsprodukte davon,
- Gießereistäube, bevorzugt Gießereistäube aus der Sphärogussherstellung, oder Aufarbeitungsprodukte aus Gießereistäuben,
- Rotschlamm aus der Aluminiumproduktion nach dem Bayer-Verfahren oder Aufarbeitungsprodukte davon, oder
- metallhaltige Gebrauchtschwefelsäure aus anderen Prozessen als der Titandioxid-Herstellung, die in den Säurekreislauf der Titandioxid-Herstellung eingebracht werden.

11. Verfahren nach einem der Ansprüche 1 bis 10, wobei die Abtrennung oder Abreicherung durch Abtrennung einer Fraktion, die das eine oder die mehreren Element(e) und/oder Verbindung(en) davon enthält, mittels Adsorption, Ionenaustausch, Extraktion, Komplexbildung, Fällung durch teilweise oder vollständige Neutralisation oder Kristallisation, bevorzugt fraktionierte Kristallisation, vorgenommen wird.

12. Verfahren nach Anspruch 11, wobei das elektrochemische Potential der verwendeten schwefelsauren Lösungen vor der Abreicherung durch Zugabe von Ti³⁺-Ionen oder Fe³⁺-Ionen erhöht oder erniedrigt wird.

13. Verfahren nach Anspruch 11 oder 12, wobei zur Abtrennung das eine oder die mehreren Element(e) und/oder Verbindung(en) davon an einen Feststoff, bevorzugt ein Titandioxid oder ein Titanoxidhydrat, vorzugsweise mit einer BET-Oberfläche von mehr als 80 g/m², noch bevorzugter mehr als 150 g/m², adsorbiert werden.

14. Verfahren nach Anspruch 13, wobei der Feststoff kontinuierlich von einer der im Sulfatverfahren verwendeten schwefelsauren Lösungen durchströmt wird oder mehrfach mit einer der im Sulfatverfahren verwendeten schwefelsauren Lösungen in Kontakt gebracht und anschließend wieder von dieser abgetrennt wird.

15. Verfahren nach Anspruch 13 oder 14, wobei der Feststoff, bevorzugt ein Titandioxid oder ein Titanoxidhydrat, mit einer Phosphorverbindung beschichtet ist.

16. Verfahren nach einem der Ansprüche 11 bis 15, wobei die Abtrennung aus der titanhaltigen Schwarzlösung erfolgt.

## Claims

1. A process for the production of one or more element(s) and/or compounds thereof from intermediate or by-products from the manufacture of titanium dioxide using the sulphate process, wherein the acidic waste arising following the process step for hydrolysis and separation of the crude TiO₂ is recycled in a circulatory process after upgrading one or more times and separation of an iron sulphate-containing precipitate in order to digest titanium-containing materials, so that an accumulation of the one or more element(s) and/or compound(s) thereof occurs in the sulphuric acid solutions used in the sulphate process, and wherein after accumulation, a depletion of the one or more element(s) and/or compound(s) thereof is carried out, in which the one or more element(s) and/or compound(s) thereof are completely or partially removed from the circuit by means of a suitable separation process, wherein the one or more element(s) and/or compound(s) thereof is/are selected from the group consisting of Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Ti, Pb, Bi, Po, At, Fr, Ra, Ac, Th, Pa, U, Pu and compounds thereof.

2. The process as claimed in claim 1 wherein, in the circulatory process, an accumulation and depletion of the one or more one or more element(s) and/or compound(s) thereof is carried out in an alternating manner with time.

3. The process as claimed in claim 1 or claim 2, wherein the depletion of the one or more element (s) and/or compound(s) thereof is carried out by separation from a composition in which iron has the greatest proportion by weight of the metallic components contained therein, wherein the composition is preferably copperas.

4. The process as claimed in one of claims 1 to 3, wherein the accumulation is carried out over at least one day, preferably over at least four weeks, particularly preferably over at least 20 weeks.

5. The process as claimed in one of claims 1 to 4, wherein the depletion is carried out without interrupting the circulatory process, in which a separation of a fraction which contains the one or more element(s) and/or compound(s) thereof is carried out at one or more sites in the circuit.

6. A process for the production of one or more element(s) and/or compounds thereof from intermediate or by-products from the manufacture of titanium dioxide using the sulphate process wherein, in addition to the Ti-containing raw materials which are usually used as starting materials in the manufacture of titanium dioxide using the sulphate process, at least one further composition which contains the one or more element(s) and/or compound(s) thereof is introduced into the titanium dioxide manufacturing process, and the one or more element(s) and/or compound(s) thereof are separated from intermediate or by-products from the manufacture of titanium dioxide, wherein the one or more element(s) and/or compound(s) thereof is/are selected from the group consisting of Be, B, Sc, V, Cr, Co, Ni, Zn, Ga, Ge, As, Se, Rb, Sr, Y, Zr, Nb, Mo, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Hg, Ti, Pb, Bi, Po, At, Fr, Ra, Ac, Th, Pa, U, Pu and compounds thereof.

7. The process as claimed in one of claims 1 to 5 wherein, in addition to the Ti-containing raw materials which are usually used as starting materials in the manufacture of titanium dioxide using the sulphate process, at least one further composition which contains the one or more element(s) and/or compound(s) thereof is introduced into the process for the manufacture of titanium dioxide and the one or more element(s) and/or compound(s) thereof are separated from intermediate or by-products from the manufacture of titanium dioxide.

8. The process as claimed in claim 6 or claim 7, wherein the composition is introduced into the sulphuric acid containing solutions used in the manufacture of titanium dioxide using the sulphate process in the form of natural mineral raw materials, industrial by-products, metal-containing waste products or fractions or reprocessing products of these materials, wherein the introduction is optionally carried out via the digester.

9. The process as claimed in claim 8 wherein, prior to introducing the natural mineral raw materials, industrial by-products, metal-containing waste products or fractions or reprocessing products of these materials into the acid circuit used in the manufacture of titanium dioxide using the sulphate process, they are:
- brought into contact with sulphuric acid, preferably acidic waste or a sulphuric acid solution produced by upgrading the acidic waste and then the solution obtained thereby is introduced into the acid circuit, or
- brought into contact with hydrochloric acid, nitric acid or another acid and at least partially dissolved and then reacted with hydrochloric acid, nitric acid or a sulphuric acid solution produced by concentrating the acidic waste and thereby replacing the anions from the acid used for dissolution with sulphate ions, preferably by distillation or stripping, removing at least 90% thereof.

10. The process as claimed in claim 8 or claim 9 wherein, prior to introduction into the acid circuit, at least 90% of the hydrochloric acid formed by contact with sulphuric acid, acidic waste or a sulphuric acid solution produced by concentration of the acidic waste is removed, preferably by distillation or stripping, wherein the metal-containing waste products comprise:
- metal chloride-containing waste from the manufacture of titanium dioxide using the chloride process,
- metal-containing scrap, preferably electronic scrap, or reprocessing products thereof,
- foundry dust, preferably foundry dust from spheroidal graphite iron manufacture, or reprocessing products from foundry dust,
- red mud from the production of aluminium using the Bayer process or reprocessing products thereof, or
- metal-containing spent sulphuric acid from processes other than the manufacture of titanium which are introduced into the acid circuit for titanium dioxide manufacture.

11. The process as claimed in one of claims 1 to 10, wherein the separation or depletion is carried out by separating a fraction which contains the one or more element(s) and/or compound(s) thereof by means of adsorption, ion exchange, extraction, complex formation, precipitation by partial or complete neutralization or crystallization, preferably fractional crystallization.

12. The process as claimed in claim 11, wherein the electrochemical potential of the sulphuric acid solutions employed is increased or reduced by adding Ti³⁺ ions or Fe³⁺ ions.

13. The process as claimed in claim 11 or claim 12 wherein, in order to separate the one or more element (s) and/or compound(s) thereof, they are adsorbed onto a solid, preferably a titanium dioxide or a titanium oxide hydrate, preferably with a BET specific surface area of more than 80 g/m², more preferably of more than 150 g/m².

14. The process as claimed in claim 13, wherein one of the sulphuric acid solutions used in the sulphate process is continuously passed through the solid or the solid is brought into contact multiple times with one of the sulphuric acid solutions used in the sulphate process and then separated again therefrom.

15. The process as claimed in claim 13 or claim 14, wherein the solid, preferably a titanium dioxide or a titanium oxide hydrate, is coated with a phosphorus compound.

16. The process as claimed in one of claims 11 to 15, wherein the separation is carried out from the titanium-containing black liquor.

## Revendications

1. Procédé destiné à extraire un ou plusieurs élément(s) et/ou composé(s) de ce(s) dernier(s) à partir de produits intermédiaires ou sous-produits de la production de dioxyde de titane selon le procédé au sulfate, lors duquel on réutilise l'acide dilué produit après l'étape de procédé de l'hydrolyse et de la séparation du TiO₂ brut dans un processus de circulation après une concentration unique ou répétée et après la séparation d'un précipité contenant du sulfate de fer pour la dissolution de matières contenant du titane, de sorte à procéder à une accumulation de l'un ou des plusieurs élément(s) et/ou composé(s) de ce(s) dernier(s) dans les solutions sulfuriques utilisées dans le procédé au sulfate, et lors duquel après l'accumulation, on procède à un appauvrissement de l'un ou des plusieurs élément(s) et/ou composé(s) de ces dernier en retirant totalement ou partiellement hors du circuit l'un ou les plusieurs élément(s) et/ou composé(s) de ce(s) dernier(s) par un procédé de séparation adapté, l'un ou les plusieurs élément(s) ou composé(s) de ce(s) dernier(s) étant choisi (s) dans le groupe comprenant le Be, le B, le Sc, le V, le Cr, le Co, le Ni, le Zn, le Ga, le Ge, l'As, le Se, le Rb, le Sr, l'Y, le Zr, le Nb, le Mo, le Ru, le Rh, le Pd, l'Ag, le Cd, l'In, le Sn, le Sb, le Te, le Cs, le Ba, le La, le Ce, le Pr, le Nd, le Pm, le Sm, l'Eu, le Gd Tb, le Dy, l'Ho, l'Er, le Tm, l'Yb, le Lu, l'Hf, le Ta, le W, le Re, l'Os, l'Ir, le Pt, l'Au, le Hg, le Tl, le Pb, le Bi, le Po, l'At, le Fr, le Ra, l'Ac, le Th, le Pa, l'U, le Pu et des composés de ce(s) dernier(s).

2. Procédé selon la revendication 1, lors duquel il s'effectue lors du processus de circulation, en alternance dans le temps une accumulation et un appauvrissement de l'un ou des plusieurs élément(s) ou composé(s) de ce(s) dernier(s).

3. Procédé selon la revendication 1 ou 2, lors duquel on procède à l'appauvrissement de l'un ou des plusieurs élément(s) ou composé(s) de ce(s) dernier(s) par la séparation d'une composition dans laquelle le fer représente la plus grande part en masse des composants métalliques contenus, la composition étant de préférence un sel filtré.

4. Procédé selon l'une quelconque des revendications 1 à 3, lors duquel on réalise l'accumulation sur au moins une journée, de préférence sur au moins quatre semaines, de manière particulièrement préférentielle sur au moins 20 semaines.

5. Procédé selon l'une quelconque des revendications 1 à 4, lors duquel l'appauvrissement s'effectue sans interruption du processus de circulation en ce qu'en un ou en plusieurs endroits du circuit, on procède à une séparation d'une fraction qui contient l'un ou les plusieurs élément(s) ou composé(s) de ce(s) dernier(s).

6. Procédé destiné à extraire un ou plusieurs élément(s) et/ou composé(s) de ce(s) dernier(s) à partir de produits intermédiaires ou sous-produits de la production de dioxyde de titane selon le procédé au sulfate, lors duquel, en supplément des matières premières contenant du titane, que l'on utilise habituellement comme matières premières lors de la production de dioxyde de titane selon le procédé au sulfate, on incorpore dans le processus au moins une composition supplémentaire qui contient l'un ou les plusieurs élément(s) ou composé(s) de ce(s) dernier(s) pour la production de dioxyde de titane et on sépare l'un ou les plusieurs élément(s) ou composé(s) de ce (s) dernier(s) de produits intermédiaires ou sous-produits de la production de dioxyde de titane, l'un ou les plusieurs élément(s) ou composé(s) de ce (s) dernier(s) étant choisi(s) dans le groupe comprenant le Be, le B, le Sc, le V, le Cr, le Co, le Ni, le Zn, le Ga, le Ge, l'As, le Se, le Rb, le Sr, l'Y, le Zr, le Nb, le Mo, le Ru, le Rh, le Pd, l'Ag, le Cd, l'In, le Sn, le Sb, le Te, le Cs, le Ba, le La, le Ce, le Pr, le Nd, le Pm, le Sm, l'Eu, le Gd Tb, le Dy, l'Ho, l'Er, le Tm, l'Yb, le Lu, l'Hf, le Ta, le W, le Re, l'Os, l'Ir, le Pt, l'Au, le Hg, le Tl, le Pb, le Bi, le Po, l'At, le Fr, le Ra, l'Ac, le Th, le Pa, l'U, le Pu et des composés de ce(s) dernier(s).

7. Procédé selon l'une quelconque des revendications 1 à 5, lors duquel en supplément des matières premières contenant du titane, que l'on utilise habituellement comme matières premières lors de la production de dioxyde de titane selon le procédé au sulfate, on incorpore dans le processus de production de dioxyde de titane au moins une composition supplémentaire et on sépare l'un ou les plusieurs élément (s) ou composé(s) de ce(s) dernier(s) de produits intermédiaires ou sous-produits de la production de dioxyde de titane.

8. Procédé selon l'une quelconque des revendications 6 ou 7, lors duquel on incorpore aux solutions sulfuriques utilisées lors de la production de dioxyde de titane selon le procédé au sulfate la composition sous la forme de matières premières minérales naturelles, de sous-produits industriels, de déchets ou fractions contenant du métal ou de produits de traitement desdites matières, l'incorporation s'effectuant en option par l'intermédiaire du réacteur de dissolution.

9. Procédé selon la revendication 8, lors duquel, avant l'incorporation dans le circuit d'acide utilisé lors de la production de dioxyde de titane selon le procédé au sulfate, on met en contact les matières premières minérales naturelles, les sous-produits industriels, les déchets ou fractions contenant du métal ou les produits de traitement desdites matières :
- avec de l'acide sulfurique, de préférence de l'acide dilué ou une solution sulfurique produite par concentration de l'acide dilué et on incorpore ensuite la solution obtenue dans le circuit d'acide ou
- avec de l'acide muriatique, de l'acide azotique ou un autre acide et on les met au moins partiellement en solution et on les transforme ensuite avec de l'acide sulfurique, de l'acide dilué ou une solution sulfurique produite par concentration de l'acide dilué et à cet effet, on remplace les anions de l'acide utilisé pour la dissolution par des ions sulfates et on les retire à raison d'au moins 90 %, de préférence par distillation ou stripage.

10. Procédé selon l'une quelconque des revendications 8 ou 9, lors duquel, avant l'incorporation dans le circuit d'acide, on retire à raison d'au moins 90 %, de préférence par distillation ou stripage l'acide muriatique produit lors de la mise en contact avec de l'acide sulfurique, de l'acide dilué ou une solution sulfurique produite par concentration de l'acide dilué, les déchets contenant du métal comprenant :
- des déchets contenant des chlorures métalliques issus de la production de dioxyde de titane selon le procédé au chlorure,
- des ferrailles contenant du métal, des produits de traitement de ces dernières, de préférences des ferrailles électroniques ou
- des poussières de fonderie, de préférence des poussières de fonderie issues de la production de fonte sphérolithique ou des produits de traitement des poussières de fonderie,
- de la boue rouge issue de la production d'aluminium selon le procédé Bayer ou des produits de traitement de ces dernières ou
- de l'acide sulfurique usé contenant du métal issu de processus autres que la production de dioxyde de titane, que l'on incorpore dans le circuit d'acide de la production de dioxyde de titane.

11. Procédé selon l'une quelconque des revendications 1 à 10, lors duquel on procède à la séparation ou à l'appauvrissement par séparation d'une fraction qui contient l'un ou les plusieurs élément(s) ou composé(s) de ce(s) dernier(s) par adsorption, échange d'ions, extraction, complexation, précipitation par neutralisation ou cristallisation partielle ou totale, de préférence par cristallisation fractionnée.

12. Procédé selon la revendication 11, lors duquel, avant l'appauvrissement, on relève ou on abaisse⁺ le potentiel électrochimique des solutions sulfuriques utilisées par addition d'ions de Ti³⁺ ou d'ions de Fe³⁺.

13. Procédé selon la revendication 11 ou 12, lors duquel on adsorbe pour la séparation l'un ou les plusieurs élément(s) ou composé(s) de ce(s) dernier(s) sur un solide, de préférence un dioxyde de titane ou un oxyde de titane hydraté, de préférence avec une surface BET de plus de 80 g/m², de manière encore plus préférentielle de 150 g/m².

14. Procédé selon la revendication 13, lors duquel le solide est irrigué en continu par l'une des solutions sulfuriques utilisées lors du procédé au sulfate ou est mis en contact plusieurs fois avec l'une des solutions sulfuriques utilisées lors du procédé au sulfate et ensuite de nouveau séparé de cette dernière.

15. Procédé selon la revendication 13 ou 14, lors duquel le solide, de préférence un dioxyde de titane ou un oxyde de titane hydraté est revêtu d'un composé phosphorique.

16. Procédé selon l'une quelconque des revendications 11 à 15, lors duquel la séparation s'effectue à partir de la solution noire contenant du titane.
